# EUROPEAN PATENT SPECIFICATION

(11) **EP 1 421 491 B1**
(45) Date of publication and mention of the grant of the patent: **29.11.2006**
(21) Application number: 02724536.4
(22) Date of filing: 18.04.2002
(51) Int. Cl.: G06F 11/16

(54) **METHOD FOR CHARGING INFORMATION ABOUT AN ERROR IN A DATABASE**
VERFAHREN ZUM SPEICHERN VON FEHLERINFORMATIONEN IN EINER DATENBANK
PROCEDE DE TAXATION D'INFORMATIONS D'ERREUR DANS UNE BASE DE DONNEES

(30) Priority: 04.05.2001 EP 01890128
(43) Date of publication of application: 26.05.2004
(73) Proprietor: Koninklijke Philips Electronics N.V., 5621 BA Eindhoven (NL)
(72) Inventor: PROIDL, Adolf, NL-5656 AA Eindhoven (NL)
(74) Representative: van der Veer, Johannis Leendert
(86) International application number: PCT/IB2002/001408
(87) International publication number: WO 2002/091181

(56) References cited:
- WO-A-00/52928
- WO-A-01/26287
- US-A- 4 789 986
- US-A- 5 806 075

## Description

The invention relates to a method of gathering entry data for a target database from source databases similar to one another with regard to their entry data.

The invention further relates to a computer software product which takes the form of software run on a computer, which is designed to gather entry data stored in source databases and to enter selected entry data into a target database.

The invention further relates to a computer which runs the computer software product according to the preceding paragraph.

The invention further relates to a method of notifying an administrator of a database of incorrect data records in the database for which he/she is responsible.

Document WO 96/34486 discloses a system with a plurality of source databases, a target database and a computer, which runs software which is designed to gather entry data for the target database in accordance with the method described below and to notify the administrator of the target database of incorrect data records in the target database in accordance with the method described below. With the known system, the entry data take the form of program information stored in the source databases for an electronic program guide. The source databases and the target database contain data records, which in each case identify a television broadcast of a television station, as is conventional with electronic program guides. Data record entry identifiers, such as "station", "title" or "start time", identify the significance of each data record entry in the stored data records.

According to the known method of gathering entry data, program information is received from a first source database in a checking step and compared with program information already stored in the target database. Similar data records are looked for in the source database and the target database, which similar data records contain program information relating to the same television broadcast (e.g. station: ARD, date: 13.05.2001, start time: 16:00, title: Universum). These data records are only similar to one another and not identical, because one of the two data records may contain a data record entry (e.g. "A hare is...") relating to a further data record identifier (e.g. "content"), or because one of the data record entries contained under the matching data entry identifiers may be incorrect. If no data record similar to a data record received from the source database can be found by the computer in the target database, this data record is stored in a difference database.

In an entry step, following the checking step, of the known method of gathering entry data, data records stored in the difference database are stored in the target database. These method steps are performed successively for all the source databases of the system, in order to store as many data records as possible relating to different television broadcasts in the target database and to be able to offer an extensive electronic program guide.

With the known method of notification of incorrect data records, the data records stored in the target database are checked for plausibility in a validity checking step. In this step, it is checked, for instance, whether the titles stored under the data record identifier "title" in the corresponding data record entries of the target database data records are too long. Errors in the target database detected during the validity checking step are entered in a check report, which forms an error flag. Once notified by the check report of incorrect data records in the target database, the administrator of the target database may make changes to the data record entries in the target database.

The known method of gathering entry data has the disadvantage that an incorrect data record entry in a source database is detected during the checking step as a difference between the correct data record entry in the target database and the incorrect data record entry in the source database and the correct data record in the target database is overwritten with the incorrect data record. According to the method of notifying the administrator of a database, the administrator of the target database is optionally notified of the incorrect data record in the target database, but has then to correct manually the data record already entered correctly once in the target database, which is time-consuming and cost-intensive.

United States patent US 4,789,986 describes a method for checking consistency of distributed data in which data, distributedly stored in a plurality of devices connected to a common data transmission line, are sequentially combined. Each device sends out to the data transmission line output data accompanied with information indicating a position of a processed result in the output data, and the device which receives redundant data compares collected redundant data to select a correct data by comparing only the portion of the data which was lastly added in accordance with the information accompanying the data.

It is an object of the invention to provide a method of gathering entry data of the type indicated in the first paragraph, a computer software product of the type indicated in the second paragraph and a computer of the type indicated in the third paragraph, with which the above-mentioned disadvantages are avoided.

To achieve the above-mentioned object, features according to the invention are provided for such a method of gathering entry data, such that the method may be characterized in the following way.

A method of gathering entry data for a target database according to claim 1, which contains data records with data record entries related to data record entry identifiers, from at least two source databases similar to one another in content, which source databases contain substantially the same entry data in data records with at least partially matching data record entry identifiers, the following steps being executed:
Reception of first data records from a first source database and of second data records from a second source database;
Tagging of similar first and second data records, which exhibit substantially matching data record entries for matching data record entry identifiers and thus substantially identify the same entry data;
Entry of data record entries contained in tagged similar first and second data records into a new data record in the target database, if matching data record entries for all matching data record entry identifiers are contained in the similar first and second data records;
Tagging of similar first and second data records as error data records, if the similar first and second data records comprise at least one different data record entry for a matching data record entry identifier;

Generation of a first error flag identifying the tagged error data records.

To achieve the above-mentioned object, features according to the invention are provided for such a computer software product, such that the computer software product may be characterized in the following way.

A computer software product, which may be loaded directly into the internal memory of a digital computer and comprises portions of software code, wherein the steps of the method as claimed in claim 1 are executed by the computer if the product is running on the computer.

To achieve the above-mentioned object, features according to the invention are provided for such a computer, such that the computer may be characterized in the following way.

A computer having an arithmetic unit and an internal memory, which runs the computer software product as claimed in claim 8.

In this way, the advantage is obtained that, due to the comparison of data records stored in the first source database and in the second source database performed prior to storing a data record in the target database, initially only those data records are stored in the target database which have matching data record entries for the same data record entry identifiers. Thus, storage of a data record with an incorrect data record entry is advantageously prevented. These data records entered automatically in the target database therefore have virtually never to be edited by the administrator of the target database, for which reason virtually no processing costs arise therefore.

Data records stored in the first source database and the second source database, which have stored matching data record entries for the same data record entry identifiers except for at least one data record entry identifier are tagged as error data records and a corresponding first error flag is generated. This first error flag may be passed on to the administrator of the target database in the form of an error report, and the administrator has then only to check the content of the error data records and decide which of the two tagged data records is correct and should be entered in the target database.

According to the measures of claim 2, the advantage is achieved that automatic checking is carried out as to which of the two data records tagged as error data records more probably contains correct data record entries, which are then entered in the target database - without manual involvement on the part of the administrator.

According to the measures of claim 6, the advantage is achieved that the computer executing the method of gathering entry data may actively search for source databases on the Internet and fully automatically retrieve and compare appropriate entry data. In this way, high-quality entry data may be fully automatically retrieved from source databases and assembled in the target database.

It may be mentioned that entry data may for example consist of price information relating to products, technical product data, customer data, date data or quality data. However, it has proven particularly advantageous for the method according to the invention to be used to gather and improve the quality of entry data in relation to program information for an electronic program guide.

To achieve the above-mentioned object, features according to the invention are provided for such a method of notifying an administrator about incorrect data records in the database for which he/she is responsible, such that the method may be characterized in the following way.

A method of notifying a source database administrator of incorrect data records in the source database for which he/she is responsible according to claim 11, wherein the following steps are executed:
Reception of at least first data records from a first source database, of second data records from a second source database and of third data records from a third source database;
Tagging of similar data records from the at least first, second and third data records which exhibit substantially matching data record entries for matching data record entry identifiers and thus substantially identify the same entry data;
Generation of a second error flag, if the majority of the data records tagged with regard to one item of entry data contain matching data record entries for all the matching data record entry identifiers, wherein the second error flag identifies at least one of the at least three data records as an incorrect data record, which comprise(s) at least one different data record entry compared with the other data records for matching data record entry identifiers of the tagged data records.

As claimed in claim 11, and also as claimed in claim 3, it is determined automatically which of the three data records containing substantially the same entry data comprises at least one incorrect data record entry. This incorrect data record is tagged with the second error flag. The data record entries contained in the other two data records not tagged with the second error flag and therefore very probably correct may advantageously be entered into the target database either automatically or after brief checking by the target database administrator.

In this way, the advantage is achieved that the target database administrator is clearly notified by the second error flag as to which data record is actually incorrect and which data record may be entered in the target database. Thus, storage of a data record with an incorrect data record entry is advantageously prevented with a very high level of probability.

It may be mentioned that similar data records may also be received from four, five or even more similar source databases, in order to establish which of the data records containing substantially the same entry data contains an incorrect data record entry. It is decided, in accordance with the majority principle, which data record comprises incorrect data record entries and is tagged as an error data record.

According to the measures of claim 4 and claim 12, the advantage is achieved that the source database administrator is pointed to an incorrect data record in the source database for which he/she is responsible and may repair the latter. The quality of the entry data of the database for which the administrator is responsible is therefore increased, for which reason more and more users will use this database. This larger number of database users has considerable advantages for the proprietors of the database either due to increased database utilization fees or due to increased advertising income.

According to the measures of claim 5 and claim 13, a business method is obtained, according to which an appropriate notification fee is charged for notification of incorrect data records in the source database. The proprietor of the source database will be happy to pay this notification fee, since, due to notification of incorrect data records in his/her source database, the proprietor is able to reduce the working time of the source database administrator, who no longer has to check the validity of the data records entered in the source database. In addition, the source database proprietor increases his/her revenue due to the improved quality of the entry data, as described above.

If a utilization fee has to be paid for retrieval of the source database data records, the source database proprietor and the target database proprietor could then agree to allow the source database data records to be retrieved by the target database administrator for free, no notification fee then being charged in return. In this way, the business method claimed in claims 5 and 13 would also be achieved.

The invention will be further described with reference to examples of embodiments shown in the drawings, to which, however, the invention is not restricted.

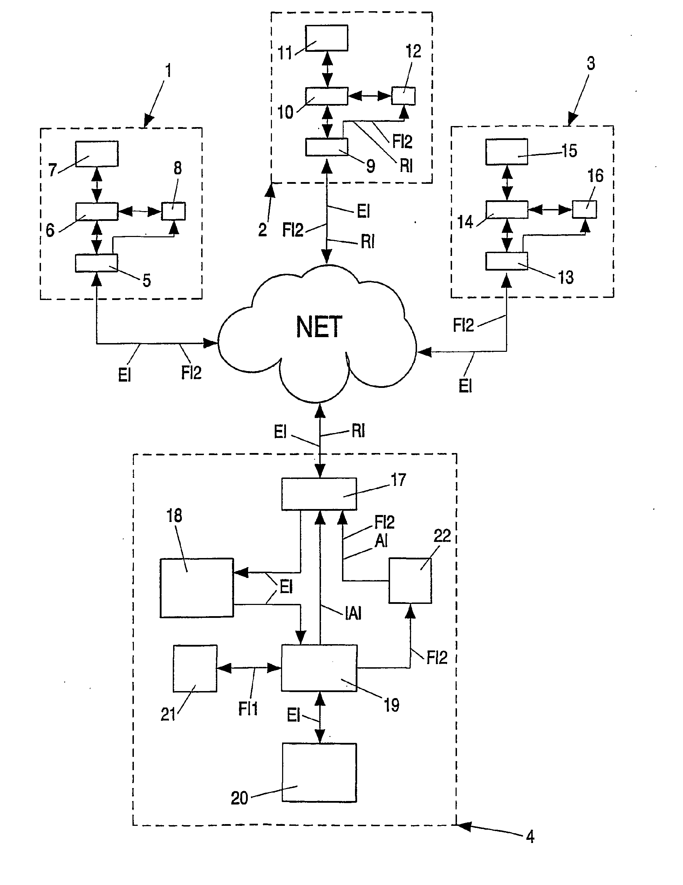

Fig. 1 shows a system consisting of three source databases and a target database, wherein an arithmetic module of the target database selects data records retrieved from the source databases and enters them in a target memory module of the target database.

Fig. 1 shows a system having a first source database 1, a second source database 2, a third source database 3 and a target database 4, which are connected together via the Internet NET. In the source databases 1, 2 and 3 there is stored program information from so-called electronic program guides in the form of entry data EI, which contain the television programs for a plurality of television stations for the next week for example. Each item of entry data EI here identifies a television broadcast, such as for example the film "Casablanca", which is to be broadcast at 17:00 on 13th May 2001 by the television station "ARD".

The first source database 1 comprises an interface 5, which comprises an Ethernet network adapter, which executes protocols (e.g. SMTP, HTTP) necessary for the communication of data over the Internet NET. Such an interface 5 has been known for a long time, for which reason it will not be examined in any more detail. An arithmetic module 6 of the first source database 1 is designed to fetch entry data EI stored in a memory module 7 of the first source database 1 and to feed the fetched entry data EI to the interface 5. An editing module 8 allows an administrator of the first source database 1 to edit the entry data EI fetched by the arithmetic module 6 from the memory module 7, if incorrect entry data EI are detected.

The second source database 2 contains an interface 9, an arithmetic module 10, a memory module 11 and an editing module 12 and the third source database 3 contains an interface 13, an arithmetic module 14, a memory module 15 and an editing module 16, wherein the mode of operation of these modules corresponds to the mode of operation of the corresponding modules of the first source database 1. A large number of such source databases are currently connected to the Internet NET and store the most varied types of entry data EI, such as for example product information about products, technical product data, customer data, date data or quality data.

The source databases 1, 2 and 3 are similar to one another with regard to their content, since the source databases 1, 2 and 3 store similar entry data EI about in part the same television broadcasts. The electronic program guide stored in the first source database 1 is provided for German users and contains the television programs to be broadcast by television stations receivable in Germany, such as for example ARD, ZFD and Bayrischer Rundfunk. The electronic program guide stored in the second source database 2 is provided for Austrian users and contains the television programs to be broadcast by television stations receivable in Austria, such as for example ORF1, ORF2 and ARD. The electronic program guide stored in the third source database 3 is provided for Swiss users and contains the television programs to be broadcast by television stations receivable in Switzerland, such as for example SW1, SW2 and ARD.

The proprietors of the target database 4 would like to provide an electronic program guide usable by users from Germany, Austria and Switzerland and which contains the television programs to be broadcast by television stations receivable in these countries. For this purpose, the target database 4 is designed to gather automatically the entry data EI stored in the three similar source databases 1, 2 and 3.

To make this possible, the target database 4 comprises an interface 17, a temporary storage module 18, an arithmetic module 19, a memory module 20 and an editing module 21. The target database 4 takes the form of a computer, which runs software with which the computer is designed to gather entry data EI and to notify an administrator of one of the source databases 1, 2 or 3 of incorrect data records of the source database 1, 2 or 3 for which the administrator is responsible.

The method of operation of the target database 4 is explained in more detail with reference to an example of application of the system according to Fig. 1. According to the example of application, it is assumed that, in the memory module 7 of the first source database 1, entry data EI relating to the television broadcasts receivable over the next week from the television stations ARD, ZFD and Bayrischer Rundfunk are stored in first data records, an extract of which is illustrated in Table 1.

**Table 1 (first source database):**

| Station | Date | Start time | Title |
|---|---|---|---|
| ··· | ··· | ··· | ··· |
| ARD | 13-05-2001 | 16:00 | Universum |
| ARD | 13-05-2001 | 16:45 | Adverts |
| ARD | 13-05-2001 | 17:00 | Casablanca |
| ··· | ··· | ··· | ··· |

Table 1 contains data record entries under data record entry identifiers "station", "date", "start time" and "title" for each data record of a television broadcast. According to the example of application, it is further assumed that, in the memory module 11 of the second source database 2, entry data EI relating to the television broadcasts receivable over the next week from the television stations ORF1, ORF2 and ARD are stored in second data records, an extract of which is illustrated in Table 2.

**Table 2 (second source database):**

| Station | Date | Start time | Rating: | Title |
|---|---|---|---|---|
| ··· | ··· | ··· | ··· | ··· |
| ARD | 13-05-2001 | 16:00 | 1 | Universum |
| ARD | 13-05-2001 | 16:45 | - | Adverts |
| ARD | 13-05-2001 | 17:30 | 3 | Casablanca |
| ARD | 13-05-2001 | 20:00 | 2 | Sport (Formula 1) |
| ··· | ··· | ··· | ··· | ··· |

In addition to the data entry identifiers contained in Table 1, Table 2 also contains a data record entry under the data record entry identifier "rating" for each data record of a television broadcast, which identifies how worth seeing the television broadcast is. According to the example of application, it is further assumed that, in the memory module 15 of the third source database 3, entry data EI relating to the television broadcasts receivable over the next week from the television stations SW1, SW2 and ARD are stored in third data records, an extract of which is illustrated in Table 3.

**Table 3 (third source database):**

| Station | Date | Start time | Title | Content |
|---|---|---|---|---|
| ··· | ··· | ··· | ··· | ··· |
| ARD | 13-05-2001 | 16:00 | Universum | A hare is... |
| ARD | 13-05-2001 | 16:45 | Adverts | - |
| ARD | 13-05-2001 | 17:00 | Casablanca | Old but good... |
| ARD | 13-05-2001 | 20:00 | Sport (Formula 1) | The fastest... |
| ··· | ··· | ··· | ··· | ··· |

In addition to the data record entry identifiers contained in Table 1, Table 3 also contains a data record entry under the data record entry identifier "content" for each data record of a television broadcast, which gives a brief description of the content of the respective television broadcast. The arithmetic module 19 of the target database 4 is designed to gather the entry data EI stored in the source databases 1, 2 and 3, as is described below.

For this purpose, the arithmetic module 19 is designed to feed Internet address data IAI to the interface 17, which data contain the Internet addresses of the three source databases 1, 2 and 3. The interface 17 is designed then to retrieve and receive the entry data EI of the first data records, the second data records and the third data records from the source databases 1, 2 and 3. The retrieved entry data EI are stored in the temporary memory module 18.

The arithmetic module 19 is then designed to compare the data record entries of the data records stored in the temporary memory module 18. During this process, the arithmetic module 19 establishes that the data records stored in the third rows of Tables 1, 2 and 3 contain matching data record entries "ARD", "13-05-2001", "16:00" and "Universum" for the matching data record entry identifiers "station", "date", "start time" and "title". The arithmetic module 19 is designed then to tag these similar first, second and third data records. This tagging is effected by an additional entry in a further column in the Tables 1, 2 and 3 stored in the temporary memory module 18.

The arithmetic module is designed to enter the data record entries contained in tagged similar first, second and third data records into a new data record in the memory module 20 of the target database 4, if matching data record entries for all matching data record entry identifiers are contained in the similar first, second and third data records. A new data record is stored in the memory module 20, which contains all the data record entries contained in the three matching data records, as shown in Table 4 in the manner of an extract.

**Table 4 (target database)**

| Station | Date | Start time | Title | Rating: | Content |
|---|---|---|---|---|---|
| ··· | ··· | ··· | ··· | ··· | ··· |
| ARD | 13-05-2001 | 16:00 | Universum | 1 | A hare is... |
| ARD | 13-05-2001 | 16:45 | Adverts | - | - |
| ARD | 13-05-2001 | 17:00 | Casablanca | 3 | Old but good... |
| ARD | 13-05-2001 | 20:00 | Sport (Formula 1) | 2 | The fastest... |
| ··· | ··· | ··· | ··· | ··· | ··· |

In this way, the advantage is achieved that the target database 4 fully automatically fetches current entry data EI from the three source databases 1, 2 and 3 and establishes which of the entry data EI are definitely correct, since these are entered concurrently in all the source databases 1, 2 and 3. Such entry data EI are advantageously entered automatically into the target database 4.

The new data record contained in the third row of the target database contains both the matching data record entries contained in the similar data records for the matching data record entry identifiers "station", "date", "start time" and "title" and the data record entry contained only in the second data record for the data record entry identifier "rating" and the data record entry contained only in the third data record for the data record entry identifier "content".

In this way, the advantage is achieved that all the entry data EI contained in the source databases 1, 2 and 3 with regard to a television broadcast are gathered together, so that the user of the target database 4 may be provided with the most extensive information possible.

The arithmetic module 19 is further designed to tag similar first and second data records as error data records, if the similar first and second data records comprise a different data record entry for at least one matching data record entry identifier. For example, the data records stored in the fifth row of Table 1 and Table 2 in relation to the television broadcast "Casablanca" are similar data records, since the data record entries stored for the data record entry identifiers "station", "date" and "title" match. However, these similar first and second data records comprise the different data record entries "17:00" and "17:30" for the matching data record entry identifier "start time". The arithmetic module 19 is designed to tag these first and second data records as error data records and to generate a first error flag FI1 identifying the tagged error data records.

In this way, the advantage is achieved that substantially matching data records which thus highly probably relate to the same television broadcast but which differ in at least one data record entry comprising a matching data record entry identifier are tagged with the first error flag FI1. The administrator of the target database 4 has thus to check only the data records tagged with the first error flag FI1 as to which of the two different data record entries is correct. For this purpose, the first error flag FI1 is fed to the editing module 21, with which the administrator of the target database 4 may edit incorrect data records stored in the temporary memory module 18 or the memory module 20.

The arithmetic module 19 is designed to search for third data records similar to the first and second data records tagged as error data records, said third data records being received from the third source database 3. The arithmetic module 19 then finds the third data record entered in the fifth row of Table 3, which is similar to the error data records, since this third data record contains the same data record entries for the matching data record entry identifiers "station", date" and "title". The arithmetic module 19 is designed to tag this third data record contained in the fifth row of Table 3 as a similar data record to the error data records entered in the fifth rows of Table 1 and Table 2.

The arithmetic module 19 is further designed to compare the different data record entries contained in the first and second data records tagged as error data records with the data record entry contained in the tagged third data record, in order to establish by the majority principle (the majority are right) which data record entry "17:00" or "17:30" is correct. The arithmetic means 19 establish that the start time "17:00" is entered in the first and third data records, whereupon the arithmetic means 19 are designed to enter the data record entry contained in the tagged third data record into a new data record in the target database 4.

In this way, the advantage is achieved that the arithmetic module 19 automatically establishes which of the error data records contains the correct data record entry, whereupon this correct data record entry is then entered into the target database. Thus, in such cases it is also possible to dispense with manual entry by the administrator of the target database 4, whereby processing costs are saved. However, such data records of the target database 4 initially tagged as error data records could be identified for the administrator of the target database 4 in order to allow specific checking of the data record entries by the administrator.

It may be mentioned that the arithmetic module 19 could also actively search for source databases on the Internet NET and fully automatically retrieve and compare corresponding data records similar to the error data records only after the fact is established that error data records are present. In this way, high-quality entry data EI may be fully automatically fetched from source databases and assembled in the target database, because the quality of the data records ultimately entered in the target database 4 is higher than that of the source databases due to the comparison of the data record entries from different source databases and entry in accordance with the majority principle.

The arithmetic module 19 is further designed to generate a second error flag FI2, which identifies the first or second data record, tagged as an error data record, which comprises at least one different data record entry for matching data record entry identifiers of the tagged third data record. Thus, the data record fetched from the second source database 2 and contained in the fifth row of Table 2 is tagged with the second error flag FI1, since the start time "17:30" of the television broadcast entitled "Casablanca" is obviously wrong.

The target database 4 is further designed to transmit this second error flag FI1 to the administrator of the second source database 2, from which the incorrect data record was received. For this purpose, the arithmetic module 19 feeds the second error flag FI2 to address means 22 of the target database 4. The address means 22 store address data AI relating to the administrators of the respective source databases. The address data AI relating to the administrator of the first source database 1 comprises a fax number "+43 (1) 22 33 44", that for the administrator of the second source database 2 comprises an email address "Hans.Mueller@Datenbank.at" and that for the administrator of the third source database 3 a postal address "A-1120 Vienna, Maygasse 12".

According to the example of application, the address means 22 receive the second error flag FI2 tagging the incorrect data record of the second source database 2 and feed the second error flag FI2 together with the email address of the administrator of the second source database 2 to the interface 17. The interface 17 sends a corresponding email over the Internet NET to the interface 9 of the second source database 2, which feeds the second error flag FI2 to the editing module 12.

In this way the advantage is achieved that the administrator of the second source database 2 is pointed to an incorrect data record in the second source database 2 for which he/she is responsible and may repair the latter. The quality of the entry data EI of the second source database 2 for which the administrator is responsible is therefore increased, for which reason more and more users will use this source database 2. This larger number of users of the source database 2 has considerable advantages for the proprietors of the source database 2 either due to increased database utilization fees or due to increased advertising income.

The target database 4 is further designed to transmit billing information RI to the administrators of the source databases 1, 2 or 3, from which the data record tagged with the second error flag FI2 was received, in order to charge for the service of notification of incorrect data records in the source database 1, 2 or 3 for which the administrator is responsible. Bills are transmitted for example weekly or monthly to the administrators of the source databases 1, 2 and 3.

In this way, a business method is advantageously obtained, according to which an appropriate notification fee is charged for notification of incorrect data records in the source databases 1, 2 and 3. The proprietors of the source databases will be happy to pay this notification fee, since, due to notification of incorrect data records in their source databases, the proprietors are able to reduce the working time of the source database administrators, who no longer have to check the validity of the data records entered in the source databases. In addition, the source database proprietors increase their revenue due to the improved quality of the entry data EI, as described above.

If a database utilization fee has to be paid for retrieval of the source database data records, the proprietors of the source databases 1, 2 and 3 and the proprietors of the target database 4 could then agree to allow the data records of the source databases 1, 2 and 3 to be retrieved by the target database 4 for free, no notification fee then being charged in return. In this way, a very advantageous business method would likewise be achieved.

It may be mentioned that entry data could also be retrieved from five similar source databases for example, in order to compare similar data records in these entry data and enter new data records into the target database in accordance with the majority principle. Similarly, for example, the target database could check once daily whether the similar data records currently entered in the source databases would lead, in accordance with the majority principle, to a different data record from the data record already entered in the target database. If this were the case, this target database data record then recognized by the majority principle as an incorrect data record could be overwritten by the correct data record.

It may be mentioned that in particular VPS (Video-recorder Programming System) identifiers, which are used to activate video-recorder recording mode, are often changed at short notice and updating of this information in the target database is particularly important. According to the invention, a considerable advantage is thus achieved especially in the case of such sensitive information by the improvement in the quality of the data record entries and by regular updating of the data record entries in the target database.

It may be mentioned that the source databases and the target database could also be connected via any other data network/telephone network.

It may be mentioned that the target database could search automatically for similar source databases using a search engine connected with the Internet through the input of search words and use them for retrieval of similar entry data.

It may be mentioned that similarity between two source databases may be established on the basis of how many data record entry identifiers match between the two source databases. Thus, two source databases, which contain for example entry data EI for each of 30 data record entry identifiers, wherein only five of the 30 data record entry identifiers match between the two source databases, may likewise be designated similar source databases. In this case, only the entry data EI entered for the five matching data record entry identifiers would be evaluated when checking which entry data EI are correct according to the majority principle. However, depending on the purpose of the target database, all the entry data EI entered in the source databases for the 30 data record entry identifiers could also be entered into the target database.

## Claims

1. A method of gathering entry data (EI) for a target database (4), which contains data records with multiple data record entries related to corresponding data record entry identifiers, from at least two source databases (1, 2, 3), which source databases (1, 2, 3) contain the entry data (EI) in data records with at least partially matching data record entry identifiers, the following steps being executed:
reception of first data records from a first source database (1) and of second data records from a second source database (2);
store the received first data records and the received second data records in a temporary memory module (18);
compare the data record entries of the stored first and second data records;
tagging of similar first and second data records, which contain matching data record entries for matching data record entry identifiers;
entry of data record entries contained in tagged similar first and second data records into a new data record in the target database, if matching data record entries for all matching data record entry identifiers are contained in the similar first and second data records;
tagging of similar first and second data records as error data records, if the similar first and second data records comprise at least one different data record entry for a matching data record entry identifier;
generation of a first error flag (FI1) identifying the tagged error data records.

2. A method as claimed in claim 1, wherein the following further steps are executed:
reception of third data records from a third source database similar in content to the first and second databases;
tagging of a third data record similar to the first and second data records tagged as error data records, which third data record comprises data record entries matching one of the two error data records for all the matching data record entry identifiers; entry of the data record entries contained in tagged third data records into a new data record in the target database.

3. A method as claimed in claim 2, wherein the following further step is executed:
generation of a second error flag, which identifies the first or second data record, tagged as an error data record, which comprises at least one different data record entry for matching data record entry identifiers of the tagged third data record.

4. A method as claimed in claim 3, wherein the following further step is executed:
transmission of the second error flag identifying the first or second data record to an administrator of the first or second source database respectively.

5. A method as claimed in claim 4, wherein the following further step is executed:
transmission of billing information to the administrator of the first or second source database, in order to charge for the service of notification of incorrect data records in the source database for which the administrator is responsible.

6. A method as claimed in claim 1, wherein the following further step is executed:
retrieval of the first data records and/or the second data records and/or the third data records from the first source database, second source database and third source database connected with the Internet.

7. A method as claimed in claim 1, wherein the source databases contain electronic program information and one item of entry data in each case identifies one television broadcast.

8. A computer software product, which may be loaded directly into the internal memory of a digital computer and comprises portions of software code, wherein the steps of the method as claimed in claim 1 are executed by the computer if the product is running on the computer.

9. A computer software product as claimed in claim 8, wherein it is stored on a computer-readable medium.

10. A computer having an arithmetic unit and an internal memory, which runs the computer software product as claimed in claim 8.

11. A method of notifying a source database (1, 2, 3) administrator of incorrect data records in the source database (1, 2, 3) for which he/she is responsible, wherein the following steps are executed:
reception of at least first data records from a first source database (1), of second data records from a second source database (2) and of third data records from a third source database (3);
storing the received first data records, the received second data records and the received third data records in a temporary memory module (18);
comparing the data record entries of the stored first, second and third data records;
tagging of similar data records from the at least first, second and third data records which contain matching data record entries for matching data record entry identifiers;
entry of data record entries contained in tagged similar first, second and third data records into a new data record in the target database, if matching data record entries for all matching data record entry identifiers are contained in the simila first, second and third data records;
generation of an error flag (FI2), if the majority of the data records tagged with regard to one item of entry data (EI) contain matching data record entries for all the matching data record entry identifiers, wherein the error flag (FI2) identifies at least one of the at least three data records as an incorrect data record, which comprise(s) at least one different data record entry compared with the other data records for matching data record entry identifiers of the tagged data records.

12. A method as claimed in claim 11, wherein the following further step is executed: transmission of the error flag tagging at least one incorrect data record to the administrator(s) of the source databases from which the data record tagged with the error flag was received.

13. A method as claimed in claim 12, wherein the following further step is executed:
transmission of billing information to the administrator(s) of the source databases, from which the data record tagged with the error flag was received, in order to charge for the service of notification of incorrect data records in the source database for which the administrator is responsible.

## Patentansprüche

1. Verfahren zum Erfassen von Eingabedaten (EI) für eine Zieldatenbank (4), die Datensätze mit vielen Datensazteingaben in Bezug auf entsprechende Datensatzeingabeidentifizierer enthält, von wenigstens zwei Quellendantenbanken (1, 2, 3), wobei diese Quellendatenbanken (1, 2, 3) die Eingabedaten (EI) in Datensätzen mit wenigstens teilweise übereinstimmenden Datensatzeingabeidentifizierern enthalten, wobei die nachfolgenden Verfahrensschritte durchgeführt werden:
- Empfang erster Datensätze von einer ersten Quellendatenbank (1) und zweiter Datensätze von einer zweiten Quellendatenbank (2);
- Speicherung der empfangenen ersten Datensätze und der empfangenen zweiten Datensätze in einem einstweiligen Speichermodul (18);
- Vergleich der Datensatzeingaben des gespeicherten ersten und zweiten Datensatzes;
- Identifikation ähnlicher erster und zweiter Datensätze, die übereinstimmende Datensatzeigaben für übereinstimmende Datensatzeingabeidentifizierer aufweisen;
- Eingabe von Datensatzeingaben in identifizierten ähnlichen ersten und zweiten Datensätzen in einen neuen Datensatz in der Zieldatenbank, wenn übereinstimmende Datensatzeingaben für alle übereinstimmenden Datensatzeingabeidentifizierer in den ähnlichen ersten und zweiten Datensätzen enthalten sind;
- Identifizierung ähnlicher erster und zweiter Datensätze als Fehlerdatensätze, wenn die ähnlichen ersten und zweiten Datensätze wenigstens eine andere Datensatzeingabe für einen übereinstimmenden Datensatzeingabeidentifizierer aufweisen;
- Erzeugung eines ersten Ferhlermerkers (FI1), der die identifizierten Fehlerdatensätze identifiziert.

2. Verfahren nach Anspruch 1, wobei die nachfolgenden weiteren Verfahrensschritte durchgeführt werden:
- Empfang dritter Datensätze von einer dritten Quellendatenbank ähnlich dem Inhalt der ersten und der zweiten Datenbank;
- Identifizierung eines dritten Datensatzes ähnlich dem ersten und dem zweiten Datensatz, die als Fehlerdatensätze identifiziert sind, wobei dieser dritte Datensatz Datensatzeingaben aufweist, die mit einem der zwei Fehlerdatensätze für alle übereinstimmenden Datensatzeingabeidentifizierer übereinstimmen;
- Eingabe der Datensatzeingaben in identifizierten dritten Datensätzen in einen neuen Datensatz in der Zieldatenbank.

3. Verfahren nach Anspruch 2, wobei die nachfolgenden weiteren Verfahrensschritte durchgeführt werden:
- Erzeugung eines zweiten Fehlermerkers, der den ersten oder den zweiten Datensatz identifiziert, identifiziert als einen Fehlerdatensatz, der wenigstens eine andere Datensatzeingabe aufweist für übereinstimmende Datensatzeingabeidentifizierer des identifizierten dritten Datensatzes.

4. Verfahren nach Anspruch 3, wobei der nachfolgende weitere Verfahrensschritt durchgeführt wird:
- Übertragung des zweiten Fehlermerkers, der den ersten oder den zweiten Datensatz identifiziert, zu einem Administrator der ersten bzw. zweiten Quellendatenbank.

5. Verfahren nach Anspruch 4, wobei der nachfolgende weitere Verfahrensschritt durchgeführt wird:
- Übertragung von Rechnungsinformation zu dem Administrator der ersten oder zweiten Quellendatenbank, um die Dienstleistung der Anzeige nicht einwandfreier Datensätze in der Quellendatenbank zu belasten, für die der Administrator verantwortlich ist.

6. Verfahren nach Anspruch 1, wobei der nachfolgende weitere Verfahrensschritt durchgeführt wird:
- Abfrage der ersten Datensätze und/oder der zweiten Datensätze und/oder der dritten Datensätze aus der ersten Quellendatenbank, der zweiten Quellendatenbank und der dritten Quellendatenbank, die mit dem Internet verbunden sind.

7. Verfahren nach Anspruch 1, wobei die Quellendatenbanken elektronische Programminformation enthalten und ein Item von Eingabedaten in jedem Fall eine einzige Fernsehsendung identifiziert.

8. Computer-Softwareprodukt, das unmittelbar in den internen Speicher eines digitalen Computers geladen werden kann und Teile eines Softwarecodes enthält, wobei die Schritte des Verfahrens nach Anspruch 1 von dem Computer durchgeführt werden, wenn das Produkt in dem Computer läuft.

9. Computer-Softwareprodukt nach Anspruch 8, wobei dieses auf einem vom Computer auslesbaren Medium gespeichert ist.

10. Computer mit einer Recheneinheit und einem internen Speicher, der das Computer-Softwareprodukt nach Anspruch 8 laufen lässt.

11. Verfahren zum Anzeigen nicht einwandfreier Datensätze in der Quellendatenbank (1, 2, 3) an einen Quellendatenbankadministrator (1, 2, 3), der dafür verantwortlich ist, wobei die nachfolgenden Verfahrensschritte durchgeführt werden:
- Empfang wenigstens erster Datensätze von einer ersten Quellendatenbank (1), zweiter Datensätze von einer zweiten Quellendatenbank (2) und dritter Datensätze von einer dritten Quellendatenbank (3);
- Speicherung der empfangenen ersten Datensätze, der empfangenen zweiten Datensätze und der empfangenen dritten Datensätze in einem einstweiligen Speichermodul (18);
- Vergleich der Datensatzeingaben des gespeicherten ersten, zweiten und dritten Datensatzes;
- Identifikation ähnlicher Datensätze aus dem wenigstens ersten, zweiten und dritten Datensatz, die übereinstimmende Datensatzeingaben für übereinstimmende Datensatzeingabeidentifizierer aufweisen;
- Eingabe von Datensatzeingaben in identifizierten ähnlichen ersten, zweiten und dritten Datensätzen in einen neuen Datensatz in der Zieldatenbank, wenn übereinstimmende Datensatzeingaben für alle übereinstimmenden Datensatzeingabeidentifizierer in den ähnlichen ersten, zweiten und dritten Datensätzen enthalten sind;
- Erzeugung eines Ferhlermerkers (FI2), wenn die meisten Datensätze, die in Bezug auf ein Item der Eingabedaten (E1) identifiziert sind, übereinstimmende Datensatzeingaben für alle übereinstimmende Datensatzeingabeidentifizierer enthalten, wobei der Fehlermerker (FI2) wenigstens einen der wenigstens drei Datensätze als einen nicht einwandfreien Datensatz identifiziert, der wenigstens eine andere Datensatzeingabe aufweist, dies im Vergleich zu den anderen Datensätzen für übereinstimmende Datensatzeingabeidentifizierer der identifizierten Datensätze.

12. Verfahren nach Anspruch 11, wobei der nachfolgende weitere Verfahrensschritt durchgeführt wird: Übertragung des Fehlermerkers, der wenigstens einen nicht einwandfreien Datensatz identifiziert, zu dem Administrator der Quellendatenbanken, von denen der mit dem Fehlermerker identifizierte Datensatz empfangen wurde.

13. Verfahren nach Anspruch 12, wobei der nachfolgende weitere Verfahrensschritt durchgeführt wird:
- Übertragung von Rechnungsinformation zu dem (den) Administrator(en) der Quellendatenbanken, von denen der mit dem Fehlermerker identifizierte Datensatz empfangen wurde, um die Dienstleistung der Anzeige nicht einwandfreier Datensätze in der Quellendatenbank zu belasten, für die der Administrator verantwortlich ist.

## Revendications

1. Procédé de rassemblement de données d'entrée (EI) destinées à une base de données cible (4), qui contient des enregistrements de données comportant plusieurs entrées d'enregistrement de données liées à des identificateurs d'entrée d'enregistrement de données correspondants, provenant d'au moins deux bases de données sources (1, 2, 3), lesquelles bases de données sources (1, 2, 3) contiennent les données d'entrée (EI) dans des enregistrements de données comportant des identificateurs d'entrée d'enregistrement de données correspondants au moins en partie, les étapes suivantes étant exécutées:
la réception des premiers enregistrements de données provenant d'une première base de données source (1) et des deuxièmes enregistrements de données provenant d'une deuxième base de données source (2);
le stockage des premiers enregistrements de données reçus et des deuxièmes enregistrements de données reçus dans un module de mémoire temporaire (18);
la comparaison des entrées d'enregistrement de données des premiers et deuxièmes enregistrements de données stockés;
le repérage de premiers et deuxièmes enregistrements de données similaires, qui contiennent des entrées d'enregistrement de données correspondants pour des identificateurs d'entrée d'enregistrement de données correspondants;
l'entrée d'entrées d'enregistrement de données contenues dans des premiers et deuxièmes enregistrements de données similaires repérés dans un nouvel enregistrement de données dans la base de données cible, si des entrées d'enregistrement de données correspondantes pour tous les identificateurs d'entrée d'enregistrement de données correspondants sont contenues dans les premiers et deuxièmes enregistrements de données similaires;
le repérage de premiers et de deuxièmes enregistrements de données similaires comme des enregistrements de données d'erreur, si les premiers et deuxièmes enregistrements de données similaires comprennent au moins une entrée d'enregistrement de données différente pour un identificateur d'entrée d'enregistrement de données correspondant;
la génération d'un premier identificateur d'erreur (FI1) identifiant les enregistrements de données d'erreur repérés.

2. Procédé suivant la revendication 1, dans lequel les étapes supplémentaires suivantes sont exécutées:
la réception des troisièmes enregistrements de données provenant d'une troisième base de données source similaire sur le plan du contenu aux première et deuxième bases de données;
le repérage d'un troisième enregistrement de données similaire aux premier et deuxième enregistrements de données repérés comme des enregistrements de données d'erreur, lequel troisième enregistrement de données comprend des entrées d'enregistrement de données correspondant à un des deux enregistrements de données d'erreur pour tous les identificateurs d'entrée d'enregistrement de données correspondants;
l'entrée des entrées d'enregistrement de données contenues dans les troisièmes enregistrements de données repérés dans un nouvel enregistrement de données dans la base de données cible.

3. Procédé suivant la revendication 2, dans lequel l'étape supplémentaire suivante est exécutée:
la génération d'un deuxième indicateur d'erreur, qui identifie le premier ou le deuxième enregistrement de données, repéré comme un enregistrement de données d'erreur, qui comprend au moins une entrée d'enregistrement de données différente pour des identificateurs d'entrée d'enregistrement de données correspondants du troisième enregistrement de données repéré.

4. Procédé suivant la revendication 3, dans lequel l'étape supplémentaire suivante est exécutée:
la transmission du deuxième indicateur d'erreur identifiant le premier ou le deuxième enregistrement de données à un administrateur de la première ou de la deuxième base de données source, respectivement.

5. Procédé suivant la revendication 4, dans lequel l'étape supplémentaire suivante est exécutée:
la transmission d'informations de facturation à l'administrateur de la première ou de la deuxième base de données source, afin de faire payer le service de notification des enregistrements de données incorrects dans la base de données source dont l'administrateur est responsable.

6. Procédé suivant la revendication 1, dans lequel l'étape supplémentaire suivante est exécutée:
l'extraction des premiers enregistrements de données et/ou des deuxièmes enregistrements de données et/ou des troisièmes enregistrements de données de la première base de données source, de la deuxième base de données source et de la troisième base de données source connectées à l'Internet.

7. Procédé suivant la revendication 1, dans lequel les bases de données sources contiennent des informations électroniques sur des programmes et un élément de données d'entrée identifie dans chaque cas une émission de télévision.

8. Produit formant logiciel informatique, qui peut être chargé directement dans la mémoire interne d'un ordinateur numérique et comprend des parties de code logiciel, dans lequel les étapes du procédé suivant la revendication 1 sont exécutées par l'ordinateur si le produit est exécuté sur l'ordinateur.

9. Produit formant logiciel informatique suivant la revendication 8, lequel étant stocké sur un support lisible par ordinateur.

10. Ordinateur comportant une unité arithmétique et une mémoire interne, sur lequel est exécuté le produit formant logiciel informatique suivant la revendication 8.

11. Procédé de notification à un administrateur d'une base de données source (1, 2, 3) d'enregistrements de données incorrects dans la base de données source (1, 2, 3) dont il est responsable, dans lequel les étapes suivantes sont exécutées:
la réception des premiers enregistrements de données au moins provenant d'une première base de données source (1), des deuxièmes enregistrements de données provenant d'une deuxième base de données source (2) et des troisièmes enregistrements de données provenant d'une troisième base de données source (3);
le stockage des premiers enregistrements de données reçus, des deuxièmes enregistrements de données reçus et des troisièmes enregistrements de données reçus dans un module de mémoire temporaire (18);
la comparaison des entrées d'enregistrement de données des premiers, deuxièmes et troisièmes enregistrements de données stockés;
le repérage d'enregistrements de données similaires parmi les au moins premiers, deuxièmes et troisièmes enregistrements de données qui contiennent des entrées d'enregistrement de données correspondants pour des identificateurs d'entrée d'enregistrement de données correspondants;
l'entrée d'entrées d'enregistrement de données contenues dans des premiers, deuxièmes et troisièmes enregistrements de données similaires repérés dans un nouvel enregistrement de données dans la base de données cible, si des entrées d'enregistrement de données correspondantes pour tous les identificateurs d'entrée d'enregistrement de données correspondants sont contenues dans les premiers, deuxièmes et troisièmes enregistrements de données similaires;
la génération d'un indicateur d'erreur (FI2), si la majorité des enregistrements de données repérés relativement à un élément de données d'entrée (EI) contiennent des entrées d'enregistrement de données correspondantes pour tous les identificateurs d'entrée d'enregistrement de données correspondants, dans lequel l'indicateur d'erreur (FI2) identifie au moins un des au moins trois enregistrements de données comme un enregistrement de données incorrect, qui comprend (comprennent) au moins une entrée d'enregistrement de données différente par comparaison avec les autres enregistrements de données pour des identificateurs d'entrée d'enregistrement de données correspondants des enregistrements de données repérés.

12. Procédé suivant la revendication 11, dans lequel l'étape supplémentaire suivante est exécutée:
la transmission de l'indicateur d'erreur repérant au moins un enregistrement de données incorrect au ou aux administrateurs des bases de données sources d'où provient l'enregistrement de données repéré avec l'indicateur d'erreur.

13. Procédé suivant la revendication 12, dans lequel l'étape supplémentaire suivante est exécutée:
la transmission d'informations de facturation au ou aux administrateurs des bases de données sources, d'où provient l'enregistrement de données repéré avec l'indicateur d'erreur, afin de faire payer le service de notification des enregistrements de données incorrects dans la base de données source dont l'administrateur est responsable.
